# FASCICULE DE BREVET EUROPEEN

(11) **EP 2 387 880 B1**
(45) Date de publication et mention de la délivrance du brevet: **20.03.2013**
(21) Numéro de dépôt: 11166238.3
(22) Date de dépôt: 16.05.2011
(51) Int. Cl.: A01K 87/06, A01K 91/02

(54) **Canne à pêche au lancer**
Angelrute zum Wurfangeln
Fishing rod

(30) Priorité: 19.05.2010 FR 1053870
(43) Date de publication de la demande: 23.11.2011
(73) Titulaire: DECATHLON, 59650 Villeneuve d'Ascq (FR)
(72) Inventeur: Boy, Philippe, 33380, BIGANOS (FR)
(74) Mandataire: Balesta, Pierre

(56) Documents cités:
- US-A- 3 143 823
- US-A- 3 525 174
- US-A- 3 754 346
- DATABASE WPI Week 197936 Thomson Scientific, London, GB; AN 1979-H7101B XP002631185, -& SU 635 941 A1 (SIPCHENKO M I) 5 décembre 1978 (1978-12-05)

## Description

La présente invention concerne une canne à pêche au lancer qui a pour objectif essentiel de pouvoir être utilisée aisément par tout type de pêcheur, du pêcheur débutant au pêcheur expérimenté.

De manière traditionnelle, une canne à pêche au lancer se compose d'une canne à pêche en tant que telle, bien connue de l'homme du métier et d'un moulinet de pêche sur lequel est embobiné du fil de pêche qui peut être soit déroulé lors du lancer afin de projeter l'appât à une certaine distance dans le bassin de pêche soit rembobiné sous l'action d'une manivelle afin de ramener l'appât jusqu'à soi voire un poisson attrapé au moyen de cet appât.

On distingue les moulinets de pêche de type moulinet «spinning» et de type moulinet «capoté».

Les moulinets «spinning» comportent un pick up qui dans une première position déclenchée, autorise le débobinage du fil de pêche enroulé autour d'un tambour fixe du moulinet et, dans une seconde position enclenchée, permet le rembobinage du fil autour du tambour fixe sous l'action de la manivelle.

Les moulinets «capotés» comprennent notamment un capot, une coupole logée à l'intérieur du capot et une gâchette. L'actionnement de la gâchette, par le biais d'un mécanisme, permet une translation de la coupole qui vient en contact à l'intérieur du capot, ce qui assure un blocage de ce fil de pêche logé entre la coupole et le capot. Au contraire, le relâchement de la gâchette permet un retour en position normal de celle-ci, et par conséquent un dégagement de la coupole vis-à-vis du capot, ce qui libère le fil de pêche et permet soit de débobiner ledit fil de pêche lors du lancer soit inversement d'embobiner ce fil de pêche lors de l'actionnement de la manivelle.

Ainsi, avec un moulinet «spinning» le pêcheur maintient avec le doigt le fil de pêche, ouvre le pick up puis procède au lancer du fil en fouettant la canne vers l'avant, étape pendant laquelle le pêcheur doit lâcher le fil de pêche maintenu avec le doigt afin de permettre la projection vers l'avant de la ligne.

Dans le cas d'un moulinet «capoté», le pêcheur enclenche la gâchette, ce qui permet un blocage du fil de pêche à l'intérieur du moulinet. Le pêcheur procède ensuite au mouvement de lancer en fouettant la canne à pêche vers l'avant. Durant cette dernière étape, le pêcheur doit relâcher la gâchette ce qui permet son déclenchement, et ainsi le déblocage du fil, autorisant sa projection vers l'avant, le pêcheur pouvant ensuite rembobiner le fil au moyen de la manivelle afin de ramener la ligne jusqu'à lui.

Dans ces différents cas de figure, le problème majeur réside dans la synchronisation entre le mouvement de lancer et l'instant auquel le pêcheur va libérer le fil de pêche en sorte de permettre sa projection de manière convenable, cette synchronisation étant d'autant plus délicate lorsque le pêcheur est débutant.

La présente invention vise à pallier cet inconvénient majeur, facilite l'utilisation de la canne à pêche au lancer et garantit une projection convenable du fil de pêche et de l'appât à chaque mouvement de lancer. A cet effet, l'invention porte sur une canne à pêche au lancer suivant la revendication 1 comprenant un moulinet sur lequel est embobiné du fil de pêche. De manière traditionnelle le moulinet comprend un système de blocage du fil de pêche configuré pour, dans une position de blocage, maintenir le fil de pêche et dans une position de déblocage, libérer le fil de pêche. De préférence, la conception du moulinet de pêche s'apparente à celle du moulinet «capoté», c'est-à-dire que ce moulinet comprend un capot et une coupole, ladite coupole étant capable d'être actionnée en sorte de venir au contact à l'intérieur du capot et d'assurer le blocage du fil de pêche ou au contraire d'être dégagée vis-à-vis du capot en sorte de libérer le fil de pêche. On pourrait toutefois envisager des variantes de conception fonctionnant sur le même principe tel que par exemple un moulinet équipé d'un pick up et d'un frein de blocage du fil de pêche actionné par une gâchette, tel que cela est connu de l'homme du métier.

La canne à pêche au lancer comprend également :
- un élément poussoir configuré pour être déplacé dans une première position selon laquelle ledit élément poussoir active le système de blocage en position de blocage et pour être déplacé dans une seconde position selon laquelle ledit élément poussoir permet le retour du système de blocage en position de déblocage ; et
- un système de butée sur l'élément poussoir configuré pour, dans une position enclenchée, maintenir l'élément poussoir dans la première position et, dans une position déclenchée, libérer l'élément poussoir en sorte d'autoriser son retour dans la seconde position.

Une telle canne à pêche est notamment connue du document US 3 525 174. De manière remarquable la canne à pêche au lancer selon la revendication 1 comprend également une masselotte d'inertie fixée sur un élément filaire souple dont une première extrémité est assujettie au système de butée et une seconde extrémité est assujettie à la canne à pêche, l'inertie de la masselotte permettant un déplacement du système de butée en position déclenchée.

De manière préférentielle, le système de butée s'enclenche automatiquement lors de l'actionnement de l'élément poussoir dans la première position. On peut toutefois envisager un positionnement manuel du système de butée dans sa position enclenchée, sans sortir du cadre de l'invention.

On comprend que selon cette conception, le pêcheur actionne l'élément poussoir dans sa première position, ce qui active le système de blocage dans la position de blocage du fil de pêche. L'actionnement de l'élément poussoir dans sa première position permet en outre l'enclenchement du système de butée qui assure le maintien de l'élément poussoir dans sa première position et par conséquent maintient le système de blocage en position de blocage. Ainsi, le pêcheur peut procéder au mouvement de lancer en fouettant la canne à pêche au lancer vers l'avant. Le mouvement de lancer agit alors sur la masselotte ; du fait de son inertie, celle-ci permet, par le biais de l'élément filaire d'exercer une traction sur le système de butée en sorte de le déplacer en position déclenchée selon laquelle l'élément poussoir est libéré et peut revenir dans sa seconde position, ce qui autorise le retour du système de blocage dans la position de déblocage du fil de pêche et, par conséquent, permet la projection de la ligne et de l'appât vers l'avant dans le bassin de pêche. Ainsi, il n'est plus nécessaire de synchroniser le mouvement de lancer avec l'instant auquel le pêcheur doit lâcher le fil de pêche en sorte de permettre la protection de l'appât dans l'eau.

Selon un premier mode de conception de la canne à pêche au lancer objet de la présente invention, l'élément poussoir est monté directement sur le moulinet et muni d'une tête, à la manière d'une gâchette sur les moulinets traditionnels. En outre, le système de butée est constitué d'une tige de butée et d'une tige d'actionnement montées en translation longitudinale sur la canne à pêche, ladite tige de butée comportant une extrémité arrière formant une butée sur la tête de l'élément poussoir déplacé dans sa première position et une extrémité avant assujettie à une extrémité arrière de la tige d'actionnement. Cette tige d'actionnement dispose par ailleurs d'une extrémité avant assujettie à la première extrémité de l'élément filaire souple. Selon cette conception, on peut envisager par exemple l'utilisation de moulinets «capotés» comportant une gâchette disposée à l'avant, ce qui peut présenter comme avantage de pouvoir remplacer facilement le moulinet en cas de défaillance de celui-ci, sans remplacer le reste de la canne à pêche au lancer objet de la présente invention.

Selon ce premier mode de conception de la canne à pêche au lancer objet de la présente invention, une pièce de guidage est configurée pour recevoir à coulissement la tige de butée et la tige d'actionnement selon leurs axes longitudinaux, ladite pièce de guidage étant en outre configurée pour être fixée à la canne à pêche.

De manière préférentielle, selon ce premier mode de conception de la canne à pêche au lancer objet de la présente invention , l'élément poussoir est monté à pivotement pour se déplacer dans la première position ou dans la seconde position, le système de blocage du moulinet étant configuré pour repositionner cet élément poussoir dans la seconde position, lorsque le système de butée est en position déclenchée. On pourrait toutefois envisager sur le même principe un élément poussoir monté en translation verticale sur le moulinet, la position basse de l'élément poussoir correspondant à la position de déblocage du système de blocage et la translation en position haute de l'élément poussoir correspondant à la position de blocage, position haute selon laquelle la tige de butée, dans la position enclenchée, maintiendrait la tête de l'élément poussoir.

Selon un second mode de conception de la canne à pêche au lancer objet de la présente invention, l'élément poussoir comprend un bras et un doigt poussoir, lesdits bras et doigt étant montés à pivotement sur la canne à pêche. En outre, le système de butée est configuré pour maintenir en position enclenchée une extrémité avant du bras dans une position pivotée vers le haut selon laquelle le doigt poussoir agit sur le système de blocage du fil de pêche pour le maintenir en position de blocage.

Selon l'invention, le système de butée comprend des moyens de rappel configurés pour assurer le déplacement dudit système de butée en position enclenchée lors d'un déplacement de l'élément poussoir en première position. Cela facilite la manipulation de la canne à pêche au lancer lorsque le pêcheur souhaite procéder à un mouvement de lancer ; celui-ci n'a qu'à actionner l'élément poussoir dans sa première position, les moyens de rappel assurant un positionnement automatique du système de butée en position enclenchée.

Selon l'invention, la canne à pêche au lancer comprend un système raidisseur configuré pour modifier la sensibilité de déclenchement du système de butée sous l'effet de l'inertie de la masselotte. Cela présente pour avantage d'ajuster au mieux la canne à pêche au lancer en fonction de la force du pêcheur lorsque celui-ci procède à un mouvement de lancer.

Selon l'invention, la canne à pêche au lancer comprend un système de compensation configuré pour rattraper les jeux existants sur le système de blocage et garantir le maintien du fil de pêche lorsque ledit système de blocage est dans la position de blocage et que l'élément poussoir est dans la première position. Ainsi le fil de pêche reste convenable bloqué lorsque l'élément poussoir est actionné, malgré l'existence d'éventuels jeux dans le système de blocage sur le moulinet.

Selon le second mode de réalisation de la canne à pêche au lancer objet de la présente invention, le système de compensation est mis en oeuvre entre le bras et le doigt poussoir. Pour cela, le bras et le doigt poussoir sont montés à pivotement l'un par rapport à l'autre, une pièce de rappel étant agencée entre ledit bras et le doigt poussoir pour, dans la première position de l'élément poussoir, exercer un effort sur le doigt poussoir et garantir que ce doigt poussoir active et maintient convenablement le système de blocage du fil de pêche en position de blocage.

De manière préférentielle, selon le second mode de réalisation de la canne à pêche au lancer objet de la présente invention, le système de butée comprend une pièce de butée configurée pour se déplacer vers l'arrière dans une position de maintien de l'extrémité avant du bras disposé en position pivotée vers le haut et pour se déplacer vers l'avant, sous l'effet de la masselotte, dans une position dégagée de l'extrémité avant du bras autorisant le retour de l'élément poussoir dans la seconde position. En outre, un élément de rappel est configuré pour exercer un effort sur la pièce de butée en sorte de déplacer cette pièce de butée vers l'arrière.

De manière préférentielle, selon ce second mode de conception de la canne à pêche au lancer, la pièce de butée est montée à pivotement vis-à-vis de la canne à pêche, l'élément de rappel étant un ressort ou un élastique. Des variantes sont toutefois envisageables selon ce second mode de réalisation. Ainsi, selon une variante, la pièce de butée et l'élément de rappel sont concomitamment constitués d'une lame flexible dont une première extrémité est fixée vis-à-vis de la canne à pêche et une seconde extrémité permet le maintien de l'extrémité avant du bras en position pivotée vers le haut, cette seconde extrémité de la lame flexible étant apte à fléchir sous l'effet de l'inertie de la masselotte et de reprendre sa position normale lorsque cette inertie de la masselotte cesse.

Selon le second mode de réalisation de la canne à pêche au lancer objet de la présente invention, le bras comprend à son extrémité arrière un système de manipulation configuré pour actionner l'élément poussoir dans la première position. Un tel système de manipulation facilite l'actionnement de l'élément poussoir en maintenant convenable la canne à pêche au lancer avec les mains.

Selon l'invention, la canne à pêche au lancer comprend un système de verrouillage/déverrouillage du système de butée configuré pour permettre une utilisation manuelle de l'élément poussoir. Ainsi, il est possible de désactiver le système de butée en sorte d'utiliser l'élément poussoir à la manière d'une gâchette telle qu'existant sur les moulinets «capotés» traditionnels.

Selon l'invention, la canne à pêche au lancer comprend une pièce de support configurée pour être fixée sur ladite canne à pêche et pour recevoir l'élément poussoir et le système de butée. Cela facilite l'agencement de l'élément poussoir et du système de butée sur la canne à pêche.

Selon l'invention, la canne à pêche au lancer comprend une pièce de maintien configurée pour être fixée sur la canne à pêche, des moyens de fixation étant agencés entre l'extrémité avant de l'élément filaire souple et ladite pièce de maintien. Cela présente pour avantage de faciliter la mise en place ou le retrait de l'élément filaire souple notamment en vue de son remplacement en cas de défectuosité, voire pour le changement de masselotte.

Selon l'invention, l'élément filaire souple est réalisé dans un matériau injecté. Des variantes sont toutefois envisageables comme par exemple des matériaux textiles.

Les caractéristiques et avantages de la présente invention apparaitront à la lecture de la description suivante de deux modes préférentiels de conception de la canne à pêche au lancer, lesquels s'appuient sur des figures parmi lesquelles :
- la figure 1 illustre un premier mode de conception de la canne à pêche au lancer objet de la présente invention ;
- la figure 2 illustre un second mode de conception de la canne à pêche mettant en évidence une première réalisation de moyens de rappel du système de butée ;
- la figure 3 illustre un second mode de réalisation de la canne à pêche, semblable à celui de la figure 2, mettant en évidence une variante de réalisation de moyens de rappel du système de butée ;
- la figure 4 illustre une variante de conception du système de butée et des moyens de rappel selon le second mode de conception de la canne à pêche au lancer illustré aux figures 2 et 3 ;
- la figure 5 illustre un mode de conception du moulinet mettant en évidence le système de blocage du fil de pêche.

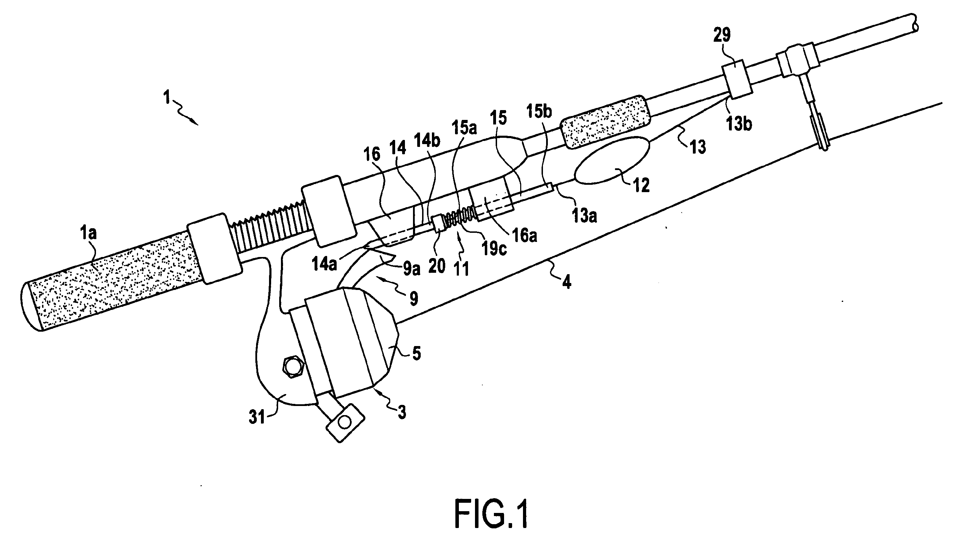

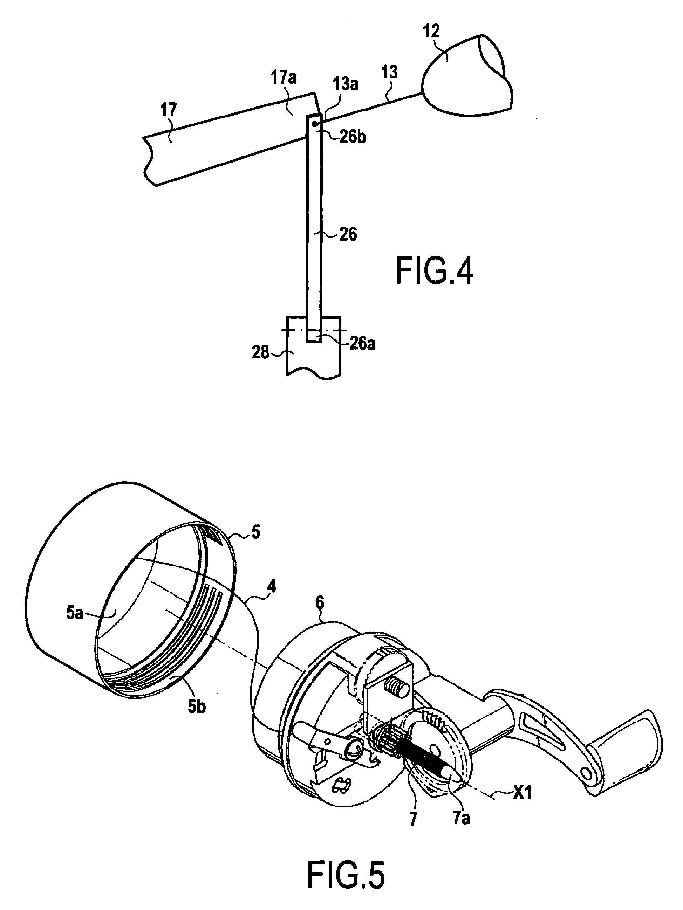

Les figures 1 à 3 illustrent la canne à pêche au lancer objet de la présente invention et plus particulièrement la partie proximale de cette canne à pêche au lancer 1 que le pêcheur maintient avec les mains durant la pratique de la pêche et au niveau de laquelle est agencé le moulinet de pêche 2,3. Selon l'invention, la canne à pêche au lancer 1 comprend un moulinet 2,3 sur lequel est embobiné du fil de pêche 4, ce moulinet 2,3 comprenant un système de blocage du fil de pêche 4. Ce système de blocage, illustré en figure 5, est constitué notamment d'un capot 5 dans lequel est intégré une partie du mécanisme du moulinet et le tambour sur lequel est embobiné le fil 4. Ce tambour est revêtu d'une coupole 6 qui vient se loger à l'intérieur du capot 5 et présente une forme semblable à celle dudit capot 5. Cette coupole 6 est capable de translater dans le sens longitudinal selon l'axe X1, illustré sur la figure 5. Lorsque la coupole 6 est translatée vers l'avant, celle-ci vient en contact dans le fond 5a du capot 5 au travers duquel passe le fil de pêche 4 tel qu'illustré sur la figure 5, ce qui permet, par la mise en contact de la coupole 6 dans le fond 5a du capot 5, d'assurer un blocage du fil de pêche 4. Au contraire, lorsque la coupole 6 revient dans sa position normale translatée vers l'arrière tel qu'illustré sur la figure 5, celle-ci est dégagée vis-à-vis du fond 5a du capot 5, ce qui permet soit le débobinage du fil par un mouvement de lancer soit son embobinage autour du tambour par l'action sur la manivelle du moulinet 2,3. Bien entendu, tel qu'illustré aux figures 1 à 3, le moulinet 2,3 comprend un carter 31 complémentaire dans sa partie arrière, le capot 5 comprenant par exemple un taraudage 5b illustré en figure 5 permettant son vissage sur ledit carter 31 tel qu'illustré sur les figures 1 à 3.

La translation de la coupole 6 est, par exemple, assurée au moyen d'un axe de translation 7 solidaire de ladite coupole 6. Une poussée exercée sur l'extrémité 7a de cet axe 7, permet sa translation vers l'avant, ce qui entraine un déplacement de la coupole 6 vers l'avant. Cet axe de translation 7 est monté en rappel par ressort permettant, lorsque la poussée au niveau de son extrémité 7a cesse, d'assurer son retour en position arrière et ainsi la translation vers l'arrière de la coupole 6 dans sa position normale illustrée en figure 5. Bien entendu des variantes de système de blocage peuvent être envisagées sur le moulinet, avec une fonction semblable.

Le système de blocage du moulinet 2,3 est actionné au moyen d'un élément poussoir 8,9 illustré sur les figures 1 à 3 qui prend par exemple appui sur l'extrémité arrière 7a de l'axe de translation 7.

Sur le mode de conception illustré en figure 1, l'élément poussoir 9 est monté directement sur le moulinet 3 ce qui présente pour avantage de pouvoir utiliser des moulinets traditionnels présentant ce type de configuration. Cet élément poussoir 9 est muni d'une tête 9a illustrée sur la figure 1. Cet élément poussoir 9 est monté à pivotement sur le moulinet 3 et est en liaison avec l'axe de translation, par exemple au niveau de son extrémité arrière 7a sur laquelle l'élément poussoir 9 vient en appui. Lorsque l'élément poussoir 9 est pivoté vers l'avant tel qu'illustré sur la figure 1, la coupole 6 est dégagée vis-à-vis du capot 5 ce qui laisse le fil de pêche libre de se dérouler ou d'être rembobiné. Au contraire, lorsque l'élément poussoir 9 est pivoté vers l'arrière celui-ci actionne l'axe de translation 7 vers l'avant et permet à la coupole 6 de venir au contact du fond 5a du capot 5, assurant le blocage du fil de pêche 4. On pourrait bien entendu envisager des variantes de conception de l'élément poussoir et prévoir par exemple un élément poussoir 9 monté en translation verticale, une position basse de l'élément poussoir correspondant à une position de déblocage du fil de pêche 4 et une position haute de l'élément poussoir correspondant à une position de blocage du fil de pêche. Dans un tel cas, une pièce de transmission complémentaire sera par exemple envisagée entre l'axe de translation 7 et l'élément poussoir 9.

On constate sur la figure 1 la présence d'un système de butée 11. Ce système butée 11 est constitué d'une tige de butée 14 prolongée vers l'avant par une tige d'actionnement 15. Sur la figure 1 la tige de butée 14 et la tige d'actionnement 15 sont disposées selon un seul et même axe longitudinal. On pourrait toutefois envisager de les disposer selon deux axes parallèles longitudinaux. La tige de butée 14 a son extrémité arrière 14a qui vient en butée contre une tête 9a configurée à l'extrémité supérieure de l'élément poussoir 9. L'extrémité avant 14b de la tige de butée 14 est solidaire de l'extrémité arrière 15a de la tige d'actionnement 15. En outre, ces deux tiges de butée 14 et d'actionnement 15 sont montées en translation longitudinale sur une pièce de guidage 16 assujettie au manche 1a de la canne à pêche 1. Cette pièce de guidage 16 pourra être fixée sur le manche 1a de la canne à pêche au lancer 1 par des systèmes de collier de serrage ou équivalent. On pourra en outre prévoir une fixation permanente voire une fixation amovible.

On constate sur la figure 1 que l'extrémité avant 15b de la tige d'actionnement 15 est assujettie à l'extrémité arrière 13a d'un élément filaire souple 13 dont l'extrémité avant 13b est assujettie à la canne à pêche au lancer 1 au moyen d'une pièce de connexion 29. En outre une masselotte 12 est montée sur cet élément filaire souple 13 tel qu'illustré en figure 1.

On constate sur la figure 1 la présence d'un ressort de rappel 19c assurant un retour en position arrière de la tige d'actionnement 15 et par conséquent de la tige de butée 14.

Dans la position illustrée à la figure 1, le fil de pêche est libre d'être déroulé ou enroulé sur le tambour du moulinet 3, le système de blocage sur le moulinet étant désactivé, c'est-à-dire en position de déblocage. Lorsque le pêcheur pivote l'élément poussoir 9 vers l'arrière, la tête 9a pousse vers l'avant sur l'extrémité arrière 14a de la tige de butée 14 assurant son coulissement longitudinalement vers l'avant vis-à-vis de la pièce de guidage 16. Une fois l'élément poussoir 9 pivoté vers l'arrière, le ressort de rappel 19c assure un retour en position de l'extrémité arrière 14a de la tige de butée 14 dans une position enclenchée. Dans cette position enclenchée, lorsque le pêcheur relâche l'élément poussoir, celui-ci tend à revenir automatiquement en position pivotée vers l'avant ; la tête 9a de l'élément poussoir 9 reste toutefois en butée contre l'extrémité arrière 14a de la tige de butée 14 revenue dans sa position enclenchée.

Selon cette position enclenchée, l'extrémité arrière 14a en butée contre la tête 9a de l'élément poussoir 9 empêche son retour en position pivotée vers l'avant, ce qui maintient la coupole 6 en appui contre le fond 5a du capot 5 et par conséquent assure le blocage du fil 4. Le pêcheur peut alors procéder au mouvement de lancer vers l'avant pour projeter la ligne et l'appât dans l'eau. Durant le mouvement de lancer, l'inertie de la masselotte 12 va agir sur l'élément filaire 13 et permettre un coulissement de la tige d'actionnement 15 longitudinalement vers l'avant et par conséquent le coulissement vers l'avant de la tige de butée 14, ce qui va permettre un dégagement de l'extrémité arrière 14a vis-à-vis de la tête 9a de l'élément poussoir et ainsi permettre son pivotement par rappel automatiquement vers l'avant, assurant le déblocage du fil 4 qui peut alors se projeter vers l'avant du fait de l'inertie de la ligne de pêche agencée à son extrémité.

Ce coulissement longitudinalement vers l'avant de la tige d'actionnement 15 et de la tige de butée 14 est conditionné par la raideur du ressort 19c. De manière préférentielle la tige de butée 14 et la tige d'actionnement sont constituées d'une seule et même tige comportant une portion filetée sur laquelle est monté un écrou 20 illustré en figure 1, le ressort de rappel 19c étant agencé entre cet écrou 20 et une portion 16a de la pièce de guidage 16. On constate que le ressort de rappel 19c est compressé entre l'écrou 20 et cette partie 16a de la pièce de guidage 16. Une action sur l'écrou, c'est-à-dire une rotation de l'écrou, permet de modifier sa position sur la portion filetée disposée dans la zone de l'extrémité avant 14b de la tige de la butée 14 et de l'extrémité arrière 15a de la tige d'actionnement 15, ce qui permet de modifier sa position longitudinalement et ainsi de comprimer plus ou moins le ressort de rappel 19c. Cela permet de contraindre plus ou moins le ressort et ainsi, d'ajuster le déclenchement de l'élément poussoir en fonction de la force de fouettement sur la canne, exercée par le pêcheur lors du mouvement de lancer.

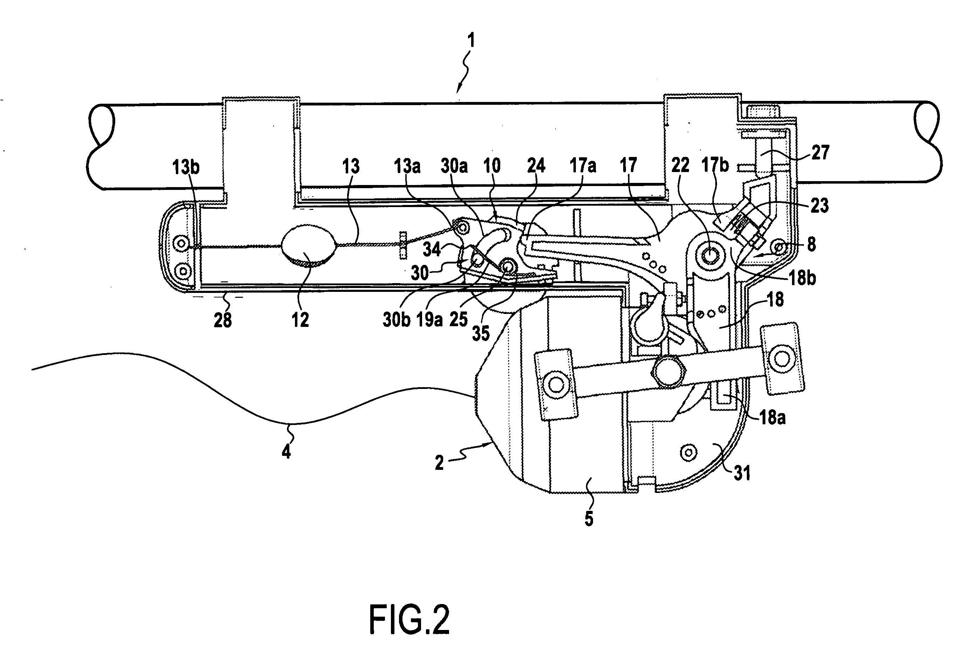

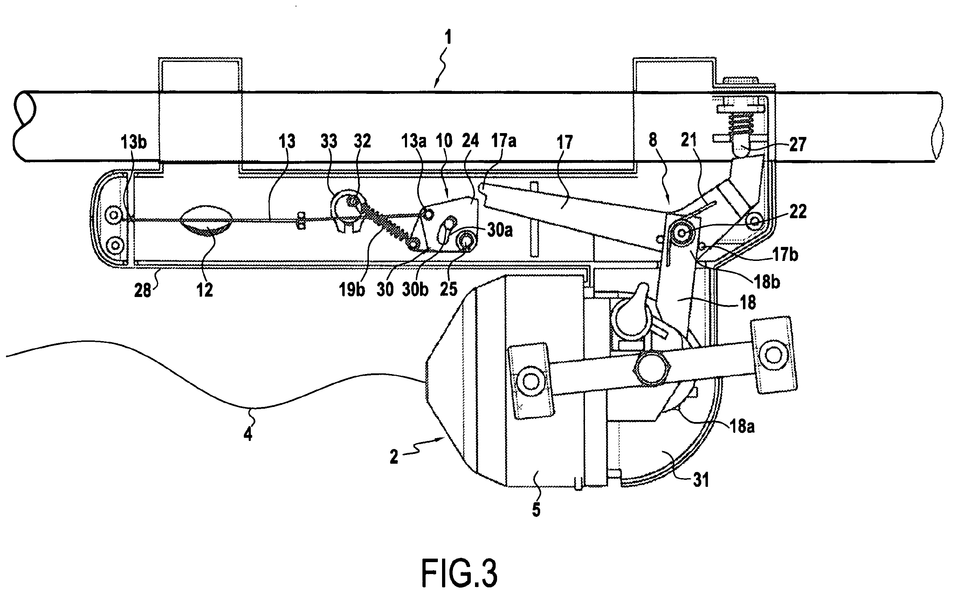

Selon la variante de conception de la canne à pêche au lancer 1, illustrée aux figures 2 et 3, on constate que l'élément poussoir 8 est constitué d'un bras 17 s'étendant longitudinalement vers l'avant et d'un doigt poussoir 18, lequel a son extrémité distale 18a qui vient par exemple en appui sur l'extrémité arrière 7a de l'axe de translation 7 actionnant la coupole 6 en sorte d'assurer le blocage du fil de pêche.

Le bras 17 et le doigt poussoir 18 sont montés à pivotement selon un axe de pivotement 22 illustré aux figures 2 et 3. On constate que le bras 17 comprend à son extrémité arrière 17b un système de manipulation 27 se présentant par exemple sous la forme d'un doigt de manipulation ou d'un bouton de manipulation. Une pression exercée sur ce système de manipulation 27 permet d'exercer un pivotement du bras 17 et du doigt poussoir 18 selon lequel l'extrémité avant 17a du bras 17 pivote vers le haut et l'extrémité distale 18a du doigt poussoir 18 pivote vers l'avant et appuie sur l'extrémité arrière 7a de l'axe de translation 7. Au contraire, le relâchement du système de manipulation 27 autorise un pivotement de l'élément poussoir 8 dans le sens inverse selon lequel l'extrémité avant 17a du bras 17 est pivoté vers le bas tel qu'illustré en figure 2 et l'extrémité distale 18a du doigt poussoir 18 est pivotée vers l'arrière, ce qui autorise une translation vers l'arrière de l'axe de translation 7 selon laquelle la coupole 6 est dégagée du capot 5. Bien entendu, on peut envisager l'actionnement de variante de système de blocage du moulinet 2 fonctionnant sur le même principe, au moyen de l'élément poussoir 8.

Le bras 17 et le doigt poussoir 18 peuvent être constitués d'une seule et même pièce. Toutefois, tel qu'illustré aux figures 2 et 3, le bras 17 et le doigt poussoir 18 sont constitués de deux pièces montées à pivotement l'une par rapport à l'autre selon l'axe de pivotement 22. On constate sur la figure 2 la présence d'un ressort spiral ou hélicoïdal 23 agencé entre l'extrémité arrière 17b du bras 17 et l'extrémité proximale 18b du doigt poussoir 18. Selon une variante on constate sur la figure 3 la présence d'un ressort de torsion 21 agencé entre l'extrémité arrière 17b du bras 17 et l'extrémité proximale 18b du doigt poussoir 18. Dans les deux cas, lorsque le système de manipulation 27 est actionné par le pêcheur, ce qui entraîne le pivotement du bras 17 et du doigt poussoir 18 en sorte d'assurer l'actionnement du système de blocage du moulinet 2, ce ressort spiral 23 ou ce ressort de torsion 21 est comprimé en sorte d'exercer un pivotement vers l'avant du doigt poussoir 18 vis-à-vis du bras 17, ce qui permet de garantir un appui convenable de l'extrémité distale 18a du doigt poussoir 18 contre l'extrémité arrière 7a de l'axe de translation 7 actionnant la coupole 6 voire d'autres variantes de système de blocage du moulinet 2. Au contraire, lorsque le bras 17 et le doigt poussoir 18 sont dans une position selon laquelle le système de blocage est dans une position de déblocage, c'est-à-dire que l'extrémité distale 18a du doigt poussoir 18 est dégagée vers l'arrière vis-à-vis de l'extrémité arrière 7a de l'axe de translation 7, ce ressort spiral 23 ou ce ressort de torsion 21 reste à l'état détendu dans une position inactive. Ce système permet donc de compenser les jeux éventuels existants au niveau de l'axe de translation 7 assurant le déplacement de la coupole 6, voire d'autres variantes de système de blocage du moulinet 2.

On constate sur les figures 2 et 3 la présence d'un système de butée 10, lequel est constitué d'une pièce de butée 24. Sur les figures 2 et 3, on constate que cette pièce de butée 24 est montée en liaison pivot selon un axe de liaison 25 permettant de pivoter ladite pièce de butée 24 vers l'arrière en sorte de la mettre en butée contre l'extrémité avant 17a du bras 17 lorsque celui-ci est pivoté vers le haut. Au contraire, un pivotement vers l'avant de la pièce de butée 24 permet de dégager celle-ci vis-à-vis de l'extrémité avant 17a du bras 17 ce qui autorise son retour en position pivotée vers le bas et par conséquent une position pivotée du doigt poussoir 18, dégagé vis-à-vis du système de blocage du moulinet 2. On pourrait envisager une variante de conception de la pièce de butée 24 et prévoir un montage en liaison glissière de cette pièce 24 assurant un coulissement vers l'avant ou vers l'arrière de celle-ci en sorte de la mettre ou non en butée contre l'extrémité avant 17a du bras 17.

On constate sur les figures 2 et 3 que l'ensemble des éléments c'est-à-dire l'élément poussoir 8, le système de manipulation 27 et le système de butée 10 sont montés sur une pièce de support 28, laquelle est configurée pour être fixée sur la canne à pêche 1.

On constate en outre sur ces figures 2 et 3 la présence d'un élément filaire souple 13, similaire à celui de la figure 1, dont l'extrémité arrière 13a est assujettie à la pièce de butée 24 et l'extrémité avant 13 est fixée à la pièce de support 28. En outre la masselotte 12 est montée sur cet élément filaire souple 13.

On constate sur la figure 2 la présence d'un second ressort de torsion 19a agencé au niveau de la pièce butée 24. De même on constate sur la figure 3 la présence d'un second ressort spiral 19b agencé entre la pièce de butée 24 et la pièce de support 28. Dans les deux cas le ressort de torsion 19a et le ressort spiral 19b ont pour fonction d'assurer un retour en position arrière de la pièce de butée 24.

Ainsi, lorsque le pêcheur souhaite procéder au lancer de la ligne dans l'eau celui-ci actionne le système de manipulation 27 ce qui permet un pivotement vers le haut du bras 17 et le pivotement vers l'avant du doigt poussoir 18, lequel vient en appui au niveau de son extrémité distale 18a sur l'extrémité avant 7a de l'axe de translation 7 et permet le blocage du fil 4 entre la coupole 6 et le fond 5a du capot 5. Selon cette position, l'extrémité avant 17a du bras 17 est pivotée vers le haut, ce qui permet au ressort de torsion 19a ou ressort spiral 19b d'agir sur la pièce de butée 24 et de la faire pivoter vers l'arrière. Le relâchement du système de manipulation 27 tend à faire pivoter vers le bas l'extrémité avant 17a du bras 17, cette extrémité 17a venant en butée contre la pièce de butée 24 et reste par conséquent bloquée dans cette position, ce qui assure le maintien en position du blocage du fil de pêche 4. Le pêcheur peut alors effectuer son mouvement de lancer durant lequel la masselotte 12 va exercer par le biais de l'élément filaire souple 13 et du fait de son inertie une action sur la pièce de butée 24 et la faire pivoter vers l'avant, ce qui permet un dégagement de cette pièce butée 24 vis-à-vis de l'extrémité avant 17a et autorise son retour en position pivotée vers le bas selon laquelle le doigt poussoir 18 pivote vers l'arrière et autorise une translation vers l'arrière de l'axe de translation 7, permettant le déblocage du fil de pêche 4 et par conséquent la projection de la ligne de pêche dans l'eau.

Le pivotement vers l'arrière de l'élément poussoir 8 est assuré par le ressort de rappel agencé directement sur le moulinet 2 et agissant sur l'axe de translation 7, lequel tend à translater vers l'arrière ce qui permet à l'extrémité arrière 7a de cet axe de translation 7 de pousser sur l'extrémité distale 18a du doigt poussoir 18 et de le faire pivoter vers l'arrière du fait que la pièce de butée 24 est dégagée vis-à-vis de l'extrémité 17a du bras 17, lequel pivote également vers le bas. Le ressort de torsion 19a ou le ressort à spiral 19b tend à faire pivoter à nouveau la pièce de butée 24 vers l'arrière et la positionne contre l'extrémité avant 17a du bras 17 tel qu'illustré sur la figure 2, en attente de pouvoir pivoter complètement vers l'arrière lors d'une prochaine action sur la système de manipulation 27.

Le pivotement vers l'avant de la pièce de butée 24 sous l'effet de l'inertie de la masselotte 12 est conditionné par la raideur du ressort de torsion 19a ou du ressort à spiral 19b. A ce titre, on constate sur la figure 3 que l'extrémité avant 32 du ressort à spiral 19b est montée sur une pièce 33, laquelle est capable de pivoter vis-à-vis de la pièce de support 28. Le pivotement de la pièce 33 permet de modifier la position de l'extrémité avant 32 du ressort à spiral 19b et ainsi de modifier la longueur dudit ressort à spiral 19b. Cela permet de modifier la contrainte exercée sur le ressort et ainsi d'ajuster celle-ci en fonction de l'effort de fouettement exercé par le pêcheur lors du mouvement de lancer, pour déclencher la pièce de butée 24 dans une position convenable assurant une optimisation du lancer de la ligne. De manière similaire on peut prévoir un système raidisseur sur le ressort de torsion 19a en agissant sur la position angulaire des branches 34,35 de ce ressort de torsion 19a.

On constate sur les figures 2 et 3 la présence d'un système de verrouillage/déverrouillage 30. Ce système de verrouillage/déverrouillage 30 se compose d'une lumière 30a circulaire agencée sur la pièce de butée 24 et d'un axe de verrouillage 30b monté à l'intérieur de cette lumière 30a circulaire et à pivotement selon l'axe de liaison 25 vis-à-vis de la pièce de support 28. Lorsque cet axe de verrouillage 30b est pivoté vers le haut tel qu'illustré sur la figure 3, celui-ci autorise un pivotement vers l'arrière de la pièce de butée 24. Au contraire, lorsque cet axe de verrouillage 30b est pivoté vers le bas tel qu'illustré sur la figure 2, la lumière 30a vient en butée contre cet axe de verrouillage 30b ce qui empêche le pivotement vers l'arrière de la pièce de butée 24. Cela présente pour avantage de condamner la pièce de butée 24 et de pouvoir utiliser le système de manipulation 27 et l'élément poussoir 8 comme sur un moulinet «capoté» traditionnel.

On peut envisager selon cette seconde variante de conception de la canne à pêche au lancer 1 illustrée aux figures 2 et 3, des variantes de réalisation du système de butée 10 telles qu'illustrées par exemple en figure 4. Sur cette figure 4 on constate la présence d'une lame flexible 26 dont l'extrémité proximale 26a est assujettie à la pièce de support 28 et l'extrémité distale 26b est capable de venir en butée sur l'extrémité avant 17a du bras 17. En outre, l'extrémité arrière 13a de l'élément filaire souple 13 est fixée à cette extrémité distale 26b. Cette lamelle 26 est capable de fléchir sous l'action de l'inertie de la masselotte 12 ce qui permet son dégagement vis-à-vis de l'extrémité avant 17a du bras 17 en sorte de permettre son pivotement vers le bas. Au contraire lors de l'actionnement de l'élément poussoir 8 sous l'action du système de manipulation 27, l'extrémité avant 17a du bras 17 pivote vers le haut ce qui permet, du fait de la flexibilité de la lamelle 26, de permettre la mise en butée de l'extrémité distale 26 de cette lamelle 26 contre ladite extrémité avant 17a du bras 17.

De manière préférentielle et non limitative l'élément filaire souple 13 est réalisé dans un matériau injecté tel que par exemple un élastomère. On peut toutefois envisager sa conception dans d'autres matières telles que des matériaux textiles.

La description qui précède des deux modes de conception préférentielle de canne à pêche au lancer n'est pas limitative. On peut notamment envisager également un système de verrouillage/déverrouillage 30 sur la canne à pêche au lancer illustré à la figure 1 selon la première variante en sorte de bloquer la tige de butée 14 dans une position coulissée longitudinalement vers l'avant en position dégagée vis-à-vis de la tête 9a de l'élément poussoir 9.

Des variantes peuvent être envisagées avec des conceptions du système de blocage sur le moulinet autre que celle décrite dans les exemples de réalisation ci-dessus, et fonctionnant sur le même principe, dans le cadre des revendications suivantes.

## Revendications

1. Canne à pêche au lancer (1) comprenant un moulinet (2, 3) sur lequel est embobiné du fil de pêche (4), le moulinet comprenant un système de blocage (5, 6, 7) du fil de pêche configuré pour, dans une position de blocage, maintenir le fil de pêche et, dans une position de déblocage, libérer le fil de pêche, la canne à pêche au lancer comprenant :
- un élément poussoir (8, 9) configuré pour être déplacé dans une première position selon laquelle ledit élément poussoir active le système de blocage en position de blocage et pour être déplacé dans une seconde position selon laquelle ledit élément poussoir permet le retour du système de blocage en position de déblocage ; et
- un système de butée (10, 11) sur l'élément poussoir configuré pour, dans une position enclenchée, maintenir ledit élément poussoir dans la première position et, dans une position déclenchée, libérer l'élément poussoir en sorte d'autoriser son retour dans la seconde position,
la canne à pêche au lancer étant **caractérisée en ce qu'**elle comprend en outre une masselotte (12) d'inertie fixée sur un élément filaire souple (13) dont une première extrémité (13a) est assujettie au système de butée et une seconde extrémité (13b) est assujettie à la canne à pêche, l'inertie de la masselotte permettant un déplacement du système de butée en position déclenchée.

2. Canne à pêche au lancer (1) selon la revendication 1, l'élément poussoir (9) étant monté directement sur le moulinet (3) et muni d'une tête (9a), le système de butée (11) étant constitué d'une tige de butée (14) et d'une tige d'actionnement (15) montées en translation longitudinale sur la canne à pêche, la tige de butée comportant une extrémité arrière (14a) formant une butée sur la tête de l'élément poussoir déplacé dans sa première position et une extrémité avant (14b) assujettie à une extrémité arrière (15a) de la tige d'actionnement, ladite tige d'actionnement ayant une extrémité avant (15b) assujettie à la première extrémité (13a) de l'élément filaire souple (13).

3. Canne à pêche au lancer (1) selon la revendication 2, une pièce de guidage (16) étant configurée pour recevoir à coulissement la tige de butée (14) et la tige d'actionnement (15) selon leurs axes longitudinaux, ladite pièce de guidage étant configurée pour être fixée à la canne à pêche.

4. Canne à pêche au lancer (1) selon l'une quelconque des revendications 1 à 3, l'élément poussoir (9) étant monté à pivotement pour se déplacer dans la première position ou dans la seconde position, le système de blocage (5, 6, 7) du moulinet (3) étant configuré pour repositionner cet élément poussoir dans la seconde position, lorsque le système de butée (11) est en position déclenchée.

5. Canne à pêche au lancer (1) selon la revendication 1 ou la revendication 4 en tant que dépendante de la revendication 1, l'élément poussoir (8) comprenant un bras (17) et un doigt poussoir (18), lesdits bras et doigt étant montés à pivotement sur la canne à pêche, le système de butée (10) étant configuré pour maintenir en position enclenchée une extrémité avant (17a) du bras dans une position pivotée vers le haut selon laquelle le doigt poussoir agit sur le système de blocage (5, 6, 7) du fil de pêche (4) pour le maintenir en position de blocage.

6. Canne à pêche au lancer (1) selon l'une quelconque des revendications 1 à 5, le système de butée (10, 11) comprenant des moyens de rappel (19a, 19b, 19c) configurés pour assurer le déplacement dudit système de butée en position enclenchée lors d'un déplacement de l'élément poussoir (8, 9) en première position.

7. Canne à pêche au lancer (1) selon l'une quelconque des revendications 1 à 6, comprenant un système raidisseur (19a, 19b, 19c, 20) configuré pour modifier la sensibilité de déclenchement du système de butée (10, 11) sous l'effet de l'inertie de la masselotte.

8. Canne à pêche au lancer (1) selon l'une quelconque des revendications 1 à 7, comprenant un système de compensation (21, 22, 23) configuré pour rattraper les jeux existant sur le système de blocage (5, 6, 7) et garantir le maintien du fil de pêche (4) lorsque ledit système de blocage (5, 6, 7) est dans la position de blocage et que l'élément poussoir (8, 9) est dans la première position.

9. Canne à pêche au lancer (1) selon les revendications 5 et 8, le bras (17) et le doigt poussoir (18) étant montés à pivotement (22) l'un par rapport à l'autre, une pièce de rappel (21, 23) étant agencée entre ledit bras et le doigt poussoir pour, dans la première position, exercer un effort sur le doigt poussoir et garantir que ledit doigt poussoir active convenablement le système de blocage (5, 6, 7) du fil de pêche (4) en sorte de le maintenir en position de blocage.

10. Canne à pêche au lancer (1) selon les revendications 5 et 6, le système de butée (10) comprenant une pièce de butée (24) configurée pour se déplacer vers l'arrière dans une position de maintien de l'extrémité avant (17a) du bras (17) en position pivotée vers le haut et pour se déplacer vers l'avant, sous l'effet de la masselotte (12), dans une position dégagée de l'extrémité avant du bras autorisant le retour de l'élément poussoir (8) dans la seconde position, un élément de rappel (19a, 19b) étant configuré pour exercer un effort sur la pièce de butée en sorte de déplacer ladite pièce de butée vers l'arrière.

11. Canne à pêche au lancer (1) selon la revendication 10, la pièce de butée (24) étant montée à pivotement (25) vis-à-vis de la canne à pêche, l'élément de rappel (19a, 19b) étant un ressort ou un élastique.

12. Canne à pêche au lancer (1) selon la revendication 10, la pièce de butée (24) et l'élément de rappel étant concomitamment constitués d'une lame flexible (26) dont une première extrémité (26a) est fixée vis-à-vis de la canne à pêche et une seconde extrémité (26b) permet le maintien de l'extrémité avant (17a) du bras (17) en position pivotée vers le haut.

13. Canne à pêche au lancer (1) selon la revendication 5, le bras (17) comprenant à son extrémité arrière (17b) un système de manipulation (27) configuré pour actionner l'élément poussoir (8) dans la première position.

14. Canne à pêche au lancer (1) selon l'une quelconque des revendications 1 à 13, comprenant un système de verrouillage/déverrouillage (30) du système de butée (10, 11) configuré pour permettre une utilisation manuelle de l'élément poussoir (8, 9).

15. Canne à pêche au lancer (1) selon l'une quelconque des revendications 1 à 14, comprenant une pièce de support (28) configurée pour être fixée sur ladite canne à pêche et pour recevoir l'élément poussoir (8) et le système de butée (10).

16. Canne à pêche au lancer (1) selon l'une quelconque des revendications 1 à 15, comprenant une pièce de maintien (29) configurée pour être fixée sur la canne à pêche, des moyens de fixation étant agencés entre l'extrémité avant (13b) de l'élément filaire souple (13) et ladite pièce de maintien.

17. Canne à pêche au lancer (1) selon l'une quelconque des revendications 1 à 16, l'élément filaire souple (13) étant réalisé dans un matériau injecté.

## Claims

1. A casting type fishing rod (1) including a reel (2, 3) on which is wound some fishing line (4), the reel including a fishing line braking system (5, 6, 7) configured, in a braking position, to hold the fishing line and, in an non-braking position, to release the fishing line, the casting fishing rod including:
- a pusher element (8, 9) configured to be moved into a first position in which said pusher element activates the braking system in the braking position and into a second position in which said pusher element allows the braking system to return to the non-braking position;
and
- a stop system (10, 11) on the pusher element configured to, in a position of engagement, hold said pusher element in the first position and, in a position of disengagement, to release the pusher element so as to allow its return to the second position,
the casting fishing rod being **characterized in that** it also includes an inertia flyweight (12) affixed to a flexible wire element (13), whereof a first end (13a) is affixed to the stop system and a second end (13b) is affixed to the fishing rod, the inertia of the flyweight allowing movement of the stop system into the position of disengagement.

2. A casting fishing rod (1) according to Claim 1, the pusher element (9) being mounted directly on the reel (3) and provided with a head (9a), the stop system (11) consisting of a stop pin (14) and an actuating pin (15) mounted for longitudinal translation on the fishing rod, the stop pin including a rear end (14a) forming a stop on the head of the pusher element moved into its first position and a forward end (14b) affixed to a rear end (15a) of the actuating pin, said actuating pin having a forward end (15b) affixed to the first end (13a) of the flexible wire element (13).

3. A casting fishing rod (1) according to Claim 2, a guide member (16) being configured to receive the stop pin (14) and the actuating pin (15) so that they slide along their longitudinal axes, said guide member being configured to be affixed to the fishing rod.

4. A casting fishing rod (1) according any one of Claims 1 to 3, the pusher element (9) being pivotably mounted so as to move into the first position or into the second position, the braking system (5, 6, 7) of the reel (3) being configured to reposition said pusher element into the second position when the stop system (11) is in the position of disengagement.

5. A casting fishing rod (1) according to Claim 1 or to Claim 4 depending on Claim 1, the pusher element (8) comprising an arm (17) and a pusher finger (18), said arm and finger being pivotably mounted on the fishing rod, the stop system (10) being configured to hold, in the position of engagement, a forward end (17a) of the arm in an upward pivoted position in which the pusher finger acts on the braking system (5, 6, 7) of the fishing line (4) to hold it in the braking position.

6. A casting fishing rod (1) according to any one of Claims 1 to 5, the stop system (10, 11) including return means (19a, 19b, 19c) configured to effect the movement of said stop system into the position of engagement upon movement of the pusher element (8, 9) to the first position.

7. A casting fishing rod (1) according to any one of Claims 1 to 6, including a tensioning system (19a, 19b, 19c, 20) configured to alter the triggering sensitivity of the stop system (10, 11) under the influence of the inertia of the flyweight.

8. A casting fishing rod (1) according to any one of Claims 1 to 7, including a compensation system (21, 22, 23) configured to take up the existing play in the braking system (5, 6, 7) and guarantee the holding of the fishing line (4) when said braking system (5, 6, 7) is in the braking position and the pusher element (8, 9) is in the first position.

9. A casting fishing rod (1) according to Claims 5 and 8, the arm (17) and the pusher finger (18) being pivot (22) mounted with respect to one another, a return member (21, 23) being provided between said arm and the pusher finger to, in the first position, exert a force on the pusher finger and guarantee that said pusher finger correctly activates the braking system (5, 6, 7) of the fishing line (4) so as to hold it in the braking position.

10. A casting fishing rod (1) according to Claims 5 and 6, the stop system (10) including a stop member (24) configured to move rearward into a position holding the forward end (17a) of the arm (17) in an upward pivoted position and to move forward, under the influence of the flyweight (12), into a position disengaged from the forward end of the arm, allowing the pusher element (8) to return to the second position, a return element (19a, 19b) being configured to exert a force on the stop member so as to move said stop member rearward.

11. A casting fishing rod (1) according to Claim 10, the stop member (24) being pivot (25) mounted with respect to the fishing rod, the return element (19a, 19b) being a spring or an elastic.

12. A casting fishing rod (1) according to Claim 10, the stop member (24) and the return element consisting concomitantly of a flexible blade (26), whereof a first end (26a) is fixed with respect to the fishing rod and a second end (26b) allows the forward end (17a) of the arm (17) to be held in an upward pivoted position.

13. A casting fishing rod (1) according to Claim 5, the arm (17) including at its rear end (17b) a control system (27) configured to actuate the pusher element (8) in the first position.

14. A casting fishing rod (1) according to any one of Claims 1 to 13, including a locking/unlocking system (30) for the stop system (10, 11) configured to allow manual use of the pusher element (8, 9).

15. A casting fishing rod (1) according to any one of Claims 1 to 14, including a support member (28) configured to be affixed to said fishing rod and to receive the pusher element (8) and the stop system (10).

16. A casting fishing rod (1) according to any one of Claims 1 to 15, including a holding member (29) configured to be attached to the fishing rod, attachment means being provided between the forward end (13b) of the flexible wire element (13) and said holding member.

17. A casting fishing rod (1) according to any one of Claims 1 to 16, the flexible wire element (13) being made of an injection-molded material.

## Patentansprüche

1. Rute zum Spinnfischen (1), umfassend eine Rolle (2, 3), auf die Angelschnur (4) aufgespult ist, wobei die Rolle ein System zum Blockieren (5, 6, 7) der Angelschnur umfaßt, das dazu ausgebildet ist, in einer Blockierstellung die Angelschnur festzuhalten und in einer Freigabestellung die Angelschnur freizugeben, wobei die Rute zum Spinnfischen umfaßt:
- ein Druckelement (8, 9), das dazu ausgebildet ist, in eine erste Position bewegt zu werden, in der das Druckelement das Blockiersystem in die Blockierstellung aktiviert, und in eine zweite Position bewegt zu werden, in der das Druckelement die Rückkehr des Blockiersystems in die Freigabestellung ermöglicht, sowie
- ein Anschlagsystem (10, 11) an dem Druckelement, das dazu ausgebildet ist, in einer eingeklinkten Position das Druckelement in der ersten Position zu halten und in einer ausgeklinkten Position das Druckelement freizugeben, um dessen Rückkehr in die zweite Position zuzulassen,
wobei die Rute zum Spinnfischen **dadurch gekennzeichnet ist, daß** sie ferner ein Trägheitsgewicht (12) umfaßt, das an einem flexiblen Drahtelement (13) fixiert ist, von dem ein erstes Ende (13a) an dem Anschlagsystem befestigt ist und ein zweites Ende (13b) an der Angelrute befestigt ist, wobei die Trägheit des Gewichts eine Bewegung des Anschlagsystems in die ausgeklinkte Position ermöglicht.

2. Rute zum Spinnfischen (1) nach Anspruch 1, wobei das Druckelement (9) direkt an der Rolle (3) angebracht und mit einem Kopf (9a) versehen ist, wobei das Anschlagsystem (11) von einer Anschlagstange (14) und von einer Betätigungsstange (15), die an der Angelrute längsverschieblich angebracht sind, gebildet ist, wobei die Anschlagstange ein hinteres Ende (14a), das einen Anschlag am Kopf des in seine erste Position bewegten Druckelements bildet, sowie ein vorderes Ende (14b), das an einem hinteren Ende (15a) der Betätigungsstange befestigt ist, umfaßt, wobei die Betätigungsstange ein vorderes Ende (15b), das an dem ersten Ende (13a) des flexiblen Drahtelements (13) befestigt ist, aufweist.

3. Rute zum Spinnfischen (1) nach Anspruch 2, wobei ein Führungsteil (16) dazu ausgebildet ist, die Anschlagstange (14) und die Betätigungsstange (15) entlang ihrer Längsachsen verschieblich aufzunehmen, wobei das Führungsteil dazu ausgebildet ist, an der Angelrute befestigt zu werden.

4. Rute zum Spinnfischen (1) nach einem der Ansprüche 1 bis 3, wobei das Druckelement (9) verschwenkbar angebracht ist, um sich in die erste Position oder in die zweite Position zu bewegen, wobei das Blockiersystem (5, 6, 7) der Rolle (3) dazu ausgebildet ist, dieses Druckelement wieder in die zweite Position zu positionieren, wenn das Anschlagsystem (11) sich in der ausgeklinkten Position befindet.

5. Rute zum Spinnfischen (1) nach Anspruch 1 oder nach dem als von Anspruch 1 abhängigen Anspruch 4, wobei das Druckelement (8) einen Arm (17) und einen Druckfinger (18) umfaßt, wobei der Arm und der Finger an der Angelrute schwenkbar angebracht sind, wobei das Anschlagsystem (10) dazu ausgebildet ist, in eingeklinkter Position ein vorderes Ende (17a) des Arms in einer nach oben geschwenkten Position zu halten, in der der Druckfinger auf das Blockiersystem (5, 6, 7) der Angelschnur (4) wirkt, um es in der Blockierstellung zu halten.

6. Rute zum Spinnfischen (1) nach einem der Ansprüche 1 bis 5, wobei das Anschlagsystem (10, 11) Rückstellmittel (19a, 19b, 19c) umfaßt, die dazu ausgebildet sind, bei einer Bewegung des Druckelements (8, 9) in die erste Position die Bewegung des Anschlagsystems in die eingeklinkte Position sicherzustellen.

7. Rute zum Spinnfischen (1) nach einem der Ansprüche 1 bis 6, umfassend ein Versteifungssystem (19a, 19b, 19c, 20), das dazu ausgebildet ist, die Empfindlichkeit des Ausklinkens des Anschlagsystems (10, 11) unter der Wirkung der Trägheit des Gewichts zu verändern.

8. Rute zum Spinnfischen (1) nach einem der Ansprüche 1 bis 7, umfassend ein Ausgleichssystem (21, 22, 23), das dazu ausgebildet ist, die an dem Blockiersystem (5, 6, 7) vorhandenen Spiele zu beseitigen und das Halten der Angelschnur (4) zu gewährleisten, wenn das Blockiersystem (5, 6, 7) sich in der Blockierstellung befindet und das Druckelement (8, 9) sich in der ersten Position befindet.

9. Rute zum Spinnfischen (1) nach den Ansprüchen 5 und 8, wobei der Arm (17) und der Druckfinger (18) zueinander verschwenkbar (22) angebracht sind, wobei ein Rückstellteil (21, 23) zwischen dem Arm und dem Druckfinger angeordnet ist, um in der ersten Position eine Kraft auf den Druckfinger auszuüben und zu gewährleisten, daß der Druckfinger das Blockiersystem (5, 6, 7) der Angelschnur (4) entsprechend aktiviert, um es in der Blockierstellung zu halten.

10. Rute zum Spinnfischen (1) nach den Ansprüchen 5 und 6, wobei das Anschlagsystem (10) ein Anschlagteil (24) umfaßt, das dazu ausgebildet ist, sich nach hinten in eine Position zum Halten des vorderen Endes (17a) des Arms (17) in nach oben verschwenkter Position zu bewegen und sich unter der Wirkung des Gewichts (12) nach vorne in eine freigegebene Position des vorderen Endes des Arms zu bewegen, die die Rückkehr des Druckelements (8) in die zweite Position zuläßt, wobei ein Rückstellelement (19a, 19b) dazu ausgebildet ist, eine Kraft auf das Anschlagteil auszuüben, um das Anschlagteil nach hinten zu bewegen.

11. Rute zum Spinnfischen (1) nach Anspruch 10, wobei das Anschlagteil (24) gegenüber der Angelrute verschwenkbar (25) angebracht ist, wobei das Rückstellelement (19a, 19b) eine Feder oder ein Gummiband ist.

12. Rute zum Spinnfischen (1) nach Anspruch 10, wobei das Anschlagteil (24) und das Rückstellelement gemeinsam von einer flexiblen Zunge (26) gebildet sind, von der ein erstes Ende (26a) gegenüber der Angelrute befestigt ist, und ein zweites Ende (26b) das Halten des vorderen Endes (17a) des Arms (17) in nach oben verschwenkter Position ermöglicht.

13. Rute zum Spinnfischen (1) nach Anspruch 5, wobei der Arm (17) an seinem hinteren Ende (17b) ein Betätigungssystem (27) umfaßt, das dazu ausgebildet ist, das Druckelement (8) in die erste Position zu betätigen.

14. Rute zum Spinnfischen (1) nach einem der Ansprüche 1 bis 13, umfassend ein System zum Verriegeln/Entriegeln (30) des Anschlagsystems (10, 11), das dazu ausgebildet ist, eine manuelle Verwendung des Druckelements (8, 9) zu ermöglichen.

15. Rute zum Spinnfischen (1) nach einem der Ansprüche 1 bis 14, umfassend ein Tragteil (28), das dazu ausgebildet ist, an der Angelrute befestigt zu werden und das Druckelement (8) sowie des Anschlagsystem (10) aufzunehmen.

16. Rute zum Spinnfischen (1) nach einem der Ansprüche 1 bis 15, umfassend ein Halteteil (29), das dazu ausgebildet ist, an der Angelrute befestigt zu werden, wobei Befestigungsmittel zwischen dem vorderen Ende (13b) des flexiblen Drahtelements (13) und dem Halteteil angeordnet sind.

17. Rute zum Spinnfischen (1) nach einem der Ansprüche 1 bis 16, wobei das flexible Drahtelement (13) aus einem spitzgegossenen Material hergestellt ist.
